# EUROPEAN PATENT APPLICATION

(11) **EP 2 565 163 A1**
(43) Date of publication of application: **06.03.2013**
(21) Application number: 11179723.9
(22) Date of filing: 01.09.2011
(51) Int. Cl.: C02F 1/00, B01D 27/00

(54) **Fluid treatment system**

(71) Applicant: Brita GmbH, 65232 Taunusstein (DE)
(72) Inventor: GUCKES, Gunter, 65529 WALDEMS (DE)
(74) Representative: van Lookeren Campagne, Constantijn August

(57) **Abstract**

A fluid treatment system includes a fluid treatment cartridge (7;29;50), including at least one component (15;36;59) for treating fluid conducted through the cartridge (7;29;50); and a device (8;30;51) including an interface (14;40;53) for attaching the cartridge (7;29;50) to the device (8;30;51) and at least one valve. The valve includes a valve member (22;45;61) movable out of a closed position to free a fluid passage through the cartridge (7;29;50), when attached to the device (8;30;51). At least one of the interface (14;40;53) and the cartridge (7;29;50) includes at least one part (21;44;63) bordering a space into which at least part (20;43;62) of the other of the interface (14;40;53) and the cartridge (7;29;50) is insertable, to allow movement of the cartridge (7;29;50) along a path to a final position of engagement with the device (8;30;51). The cartridge (7;29;50) includes at least one valve actuating member (20;43;62), able to engage a component (22;45;61) of the interface (14;40;53) to cause the valve member (22;45;61) of one of the at least one valves to be moved out of the closed position, once the cartridge (7;29;50) has reached a certain position along the path. At least one of the valve actuating members (20;43;62) includes at least a part that is movable relative to the cartridge (7;29;50) in a first direction, transverse to a direction of movement along the path, and is aligned with at least part of the interface component (22;45;61) to allow it to engage the interface component (22;45;61) only when the cartridge (7;29;50) has reached the certain position along the path.

## Description

The invention relates to a fluid treatment system, including:
a fluid treatment cartridge, including at least one component for treating fluid conducted through the cartridge; and
a device including an interface for attaching the cartridge to the device and at least one valve, the valve including a valve member movable out of a closed position to free a fluid passage through the cartridge, when attached to the device,
wherein at least one of the interface and the cartridge includes at least one part bordering a space into which at least part of the other of the interface and the cartridge is insertable, to allow movement of the cartridge along a path to a final position of engagement with the device,
wherein the cartridge includes at least one valve actuating member, able to engage a component of the interface to cause at least one of the valve members to be moved out of the closed position, once the cartridge has reached a certain position along the path.

WO 2009/015679 A1 discloses a percolation filter system including a hopper defining a basin for containing water to be filtered, in the bottom of which a seat for a cartridge is provided. The seat has a mouth, a side wall and a bottom. In the mouth, an annular recess is defined, in which a lip of the cartridge is sealingly received when the cartridge is fitted into the seat. An opening is provided in the bottom, forming a valve seat for a shutter. The shutter is driven by means of a feeler, which interferes with an abutment surface formed at the free end of an appendage projecting from the bottom of the cartridge in a recess which surrounds and receives the appendage. The shutter with the valve seat form valve means provided to intercept a flow path of the water to be filtered when no cartridge or an unsuitable cartridge is inserted in the seat, while the feeler and the corresponding abutment surface form means and counter-means for recognising the suitability of the cartridge.

A problem of the known system is that the valve is already partially opened when the cartridge has not been fully inserted into the seat. A user may then not push the cartridge further into the seat, giving rise to the risk of leaks around the lip of the cartridge.

It is an object of the invention to provide a fluid treatment system of the type mentioned above in the opening paragraph with which it is assured that the cartridge is moved sufficiently in the first direction by the user.

This object is achieved by the fluid treatment system according to the invention, which is characterised in that at least one of the valve actuating members includes at least a part that is movable relative to the cartridge in a first direction, transverse to a direction of movement along the path, and is aligned with at least part of the interface component to allow it to engage the interface component only when the cartridge has reached the certain position along the path.

Because the device includes at least one valve, the valve including a valve member movable out of a closed position to free a fluid passage for conducting fluid to be treated to the cartridge, when connected, and the cartridge includes at least one valve actuating member, able to engage a component of the interface to cause the valve member of one of the at least one valves to be moved out of the closed position, once the cartridge has reached a certain position along the path, the valves can remain closed when no cartridge is connected. With the valve closed, no fluid will flow. This gives a clear indication that no cartridge is connected or that the cartridge that is present has not been connected properly. Because at least one of the interface and the cartridge includes at least one part bordering a space into which at least part of the other of the interface and the cartridge is insertable, these parts are able to guide movement of the cartridge relative to the interface from a position in which the they are partially engaged to a position in which they are fully engaged and the cartridge is connected or at least connectable to the device. However, because at least one of the valve actuating members includes at least a part for engaging the component that is movable relative to the cartridge in the first direction and is aligned with at least part of the component only when the cartridge has reached the certain position along the path, the act of moving the cartridge along the path does not of itself result in the opening of the valve or valves. The opening of the valve or valves requires the actuating member or members to be moved sideways relative to the path of movement of the cartridge. This sideways movement, even if possible at another stage, will only result in the opening of the valves if the cartridge has been moved along the path to a sufficient extent. Compared to certain in-line systems in which a cartridge head is inserted into an interface and then turned to open a valve, rotation of the cartridge to open the valve is not required. This is because at least the part of the valve actuating member is arranged to move sideways relative to the cartridge. The valve actuating member and the components with which it is held to the cartridge need not be strong enough to withstand the relatively large forces that are required to open the valves in such known systems. It is observed that the component can correspond to the valve member in the sense that they are one and the same component. Alternatively, the component can be separate from the valve member and arranged to transfer a force to the valve member.

In an embodiment, the interface includes a wall section and at least a part of at least one of the valve actuating members is movable in the first direction past an edge of the wall section only when the cartridge has reached the certain position along the path.

An effect is that full alignment of at least the movable part of the valve actuating member and the component of which the engagement causes the valve member to be moved out of the closed position is required before the valve can start to open. Only in the certain position is movement past the edge of the wall section in a direction generally perpendicular to a surface of the wall section facing the valve actuating member possible. In this embodiment, it is possible to use a valve actuating member that moves along the wall section, e.g. because it is biased in the first direction against the wall section. The component of the interface that it is intended to engage is shielded from the valve actuating member until the part that is arranged to contact the component is correctly aligned, a position that corresponds to the certain position of the cartridge along the path. Incidentally, the wall section need not have a large extent in the direction of movement along the path. It can be a wall of a feature provided only to retain the part of the valve actuating member that moves past its edge.

In a variant of this embodiment, the at least one valve actuating member is held to the cartridge in a manner generally preventing its movement in a direction parallel to the direction of movement of the cartridge along at least a section of the path immediately preceding the certain position.

An effect is that the valve actuating member fulfils the further function of acting as a latch, with the edge of the wall section acting as a keeper. Thus, the cartridge and the interface comprise co-operating parts of a locking mechanism for locking the cartridge to the device to prevent return movement of the cartridge along the path leading to the final position. Such a shape-lock attachment is a relatively sure way of locking the cartridge in a pre-determined position to ensure that no leaks past the cartridge can occur. It is especially of use in embodiments in which the cartridge is arranged to be suspended from the bottom of a reservoir underneath a fluid outlet of the latter, because means are required to prevent the cartridge from falling off in such an embodiment.

In a further variant, the part of the valve actuating member movable past the edge of the wall section is provided with a contact surface angled so as to face at least partially in a direction opposite to the direction of movement along the path.

An effect is that the movement of the valve actuating member, or at least the part comprising the angled contact surface, acts as a wedge. Thus, as the part of the valve actuating member is moved along the edge, part of the force tending to move this part of the valve actuating member in the first direction is converted into a force tending to push the cartridge slightly further along the path to the final position. Where a resilient seal is provided at a contact point between the cartridge and the device, the movement of the valve actuating member will ultimately tend to tighten the seal.

In an embodiment of the system, at least one of the valve members is arranged to be biased towards the closed position.

An effect is to ensure that the valve is closed when the valve actuating member is retracted. This is achieved in a relatively simple way without having to provide the valve actuating member with means for pulling the valve closed when it is retracted. The valve actuating member need only contact the component to push the valve open.

In an embodiment, at least one of the cartridge and the interface is provided with a component movable by a user into a position in which at least part of the component blocks return movement of at least part of at least one of the valve actuating members in a direction opposite to the first direction.

Thus, at least one of the valve actuating member, the valve member and the component can be biased in a direction opposite to the first direction whilst ensuring that the valve remains open whilst the cartridge is attached to the device via the interface. The user can lock and unlock the valves. Where the valve actuating members also function as latches to keep the cartridge attached to the device by means of a shape-lock, the component movable by the user functions as a knob for locking the cartridge to the device. Even where the cartridge is only retained by friction, the movable component can urge a contact surface of the cartridge and a corresponding contact surface of the device against each other to clamp the cartridge to the device.

In a variant of this embodiment, at least one of the movable component and the at least one valve actuating member is provided with an inclined contact surface along which the other of the movable component and the at least one valve actuating member is movable.

An effect is to enable the actuating element to be pushed away from the cartridge by movement of a separate movable component. The movable component can be rotated (in which case the contact surface will be configured like a cam, with the valve actuating member acting as a cam follower) or it can be displaced generally linearly. The part of the movable component handled by the user can be situated some distance from the valve actuating member and the interface of the device, where it is more accessible.

In a further variant, the movable component is comprised in the cartridge and guided for movement relative to the cartridge in a direction parallel to the direction of movement along the path into the position blocking return movement of at least part of at least one of the valve actuating members.

An effect is to facilitate attachment of the cartridge. If it is pushed in place, then it is sufficient to push on the movable component. For as long as movement of the valve actuating member in the first direction is blocked by the interface of the device to which it is to be attached, pushing on the movable component will result in the cartridge's being pushed along the path towards the final position. When at least the certain position has been reached, pushing the movable component will result in sideways movement of at least part of the valve actuating member or members. In effect, the cartridge can be attached more or less with one hand. If the movable component were to have to be rotated relative to the cartridge, the user would have to hold the cartridge in one hand and the movable component in the other, with no hands free to handle the device with the interface.

In an embodiment, the movable component is provided in the form of a plunger.

This embodiment enables linear movement of the movable component. The plunger can be mounted to the interface or mounted to the cartridge. In case of its being mounted to the cartridge, the embodiment discussed above results. In case of its being mounted to the device, a similar effect arises, in that the plunger can be handled with one hand whilst using the other hand to push the cartridge and the interface against each other.

In a variant of this embodiment, the plunger is integrally connected to a part of a housing of the cartridge by a flexure bearing.

A flexure bearing is a bearing that allows movement of one rigid part, in this case the plunger, relative to another rigid part, in this case part of the housing of the cartridge, by bending of a flexible part. Generally, this housing part, the plunger and the flexure bearing connecting the plunger to the housing part will be moulded in one piece. The entire component group can be injection moulded, thus reducing the number of discrete parts making up the cartridge.

In a variant, the flexure bearing is configured to snap into a position in which at least part of the plunger blocks return movement of at least part of at least one of the valve actuating members.

Thus, the plunger is automatically held in the position in which it locks the or each valve actuating member in the position in which the valve actuating member or members cause the valve or valves to be held open.

In an embodiment, the cartridge is provided with a plurality of valve actuating members, each including at least a part that is movable relative to the direction of movement of the cartridge along the path and radially relative to a first axis of the cartridge, wherein the first axis is generally parallel to the direction of movement of the cartridge along at least a section of the path immediately preceding the certain position.

An effect is to align the first axis of the cartridge in a particular manner relative to the device. This generally helps prevent leakage between the device and the cartridge. Skewed attachment of the cartridge is largely prevented.

In an embodiment, at least one of the valve actuating members is provided in the form of a flexible member, integrally attached to a part of a housing of the cartridge and provided with a part movable relative to the cartridge in the first direction by flexing of the flexible member.

An effect is to reduce the number of discrete component parts making up the cartridge. Moreover, a separate bearing for a displaceable valve actuating member is not required. Furthermore, it is easy to configure the cartridge in such a manner that the valve actuating members act to lock the cartridge to the device, because the locking forces can be transmitted through the point of transition from the cartridge housing part to the valve actuating member.

In an embodiment, at least one of the cartridge and the device is provided with a sealing ring for engaging a surface of the other of the cartridge and the device, and the sealing ring lies generally in a plane transverse to the direction of movement of the cartridge along at least a section of the path immediately preceding the certain position.

It is thus ensured that the valve can only be opened by the valve actuating member when the cartridge has been moved sufficiently along the path in a direction generally perpendicular to the plane of the sealing ring. In other words, it is assured that the sealing ring is pressed against a co-operating sealing surface sufficiently tightly before the valve or valves is or are opened.

In an embodiment, the device includes a chamber for receiving the cartridge, the chamber including at one end a mouth through which at least part of the cartridge is insertable and at an opposite end the interface and at least one fluid outlet closable by a respective one of the at least one valve members, wherein at least one of the device and the cartridge is provided with a sealing ring for engaging the other of the device and the cartridge, wherein the cartridge includes at least one fluid inlet to one side of the sealing ring and the valve actuating members and at least one fluid outlet to an opposite side of the sealing ring when the cartridge is attached to the device.

In this embodiment, it is ensured that substantially all the fluid to be filtered is forced through the at least one fluid inlet of the cartridge and out of the at least one fluid outlet. Any bypass of fluid through the mouth of the chamber past the cartridge and out of a fluid outlet of the chamber is substantially prevented, because the valve or valves are provided to close this fluid outlet of the chamber when the cartridge has not been inserted properly, and the sealing ring prevents the bypass of fluid when the cartridge has been inserted properly.

In an embodiment, the system includes a reservoir provided with the interface and a receptacle, the reservoir with the cartridge attached being placeable within the receptacle to enable fluid in the reservoir to flow through the cartridge into the receptacle.

Thus, the system forms a gravity-driven system for treating fluids, in which fluid to be treated is poured into the reservoir, passes through the cartridge and is collected in the receptacle. It is assured that fluid from the reservoir can only flow into the receptacle when a cartridge has been properly attached. The user is made aware of the fact that the cartridge has been correctly and fully attached by the start of flow of fluid from the reservoir to the receptacle. There is no trickle of fluid before the cartridge has reached a position sufficient to seal off any bypass connections between the reservoir and the receptacle.

The invention will be explained in further detail with reference to the accompanying drawings, in which:
Fig. 1 is a side view of a jug for receiving a reservoir and fluid treatment cartridge to form a fluid treatment system;
Fig. 2 is a cross-sectional view of a first embodiment of a reservoir with an inserted fluid treatment cartridge prior to its being locked to the reservoir;
Fig. 3 is an enlarged view of part A of Fig. 2;
Fig. 4 is a cross-sectional view of the reservoir and cartridge of Figs. 2 and 3, with the cartridge locked to the reservoir;
Fig. 5 is an enlarged view of part B of Fig. 4;
Fig. 6 is a cross-sectional view of a second embodiment of a reservoir and fluid treatment cartridge;
Fig. 7 is a cross-sectional view of a third embodiment of a reservoir and fluid treatment cartridge in a state in which the cartridge is not yet locked to the reservoir; and
Fig. 8 is a cross-sectional view of the reservoir and cartridge of Fig. 7 in a state in which the cartridge is locked to the reservoir.

In the following, gravity-driven liquid treatment systems comprising a replaceable liquid treatment cartridge will be described by way of example. The principles set out can be applied equally to pressure-driven liquid treatment systems. A typical application is in the treatment of water.

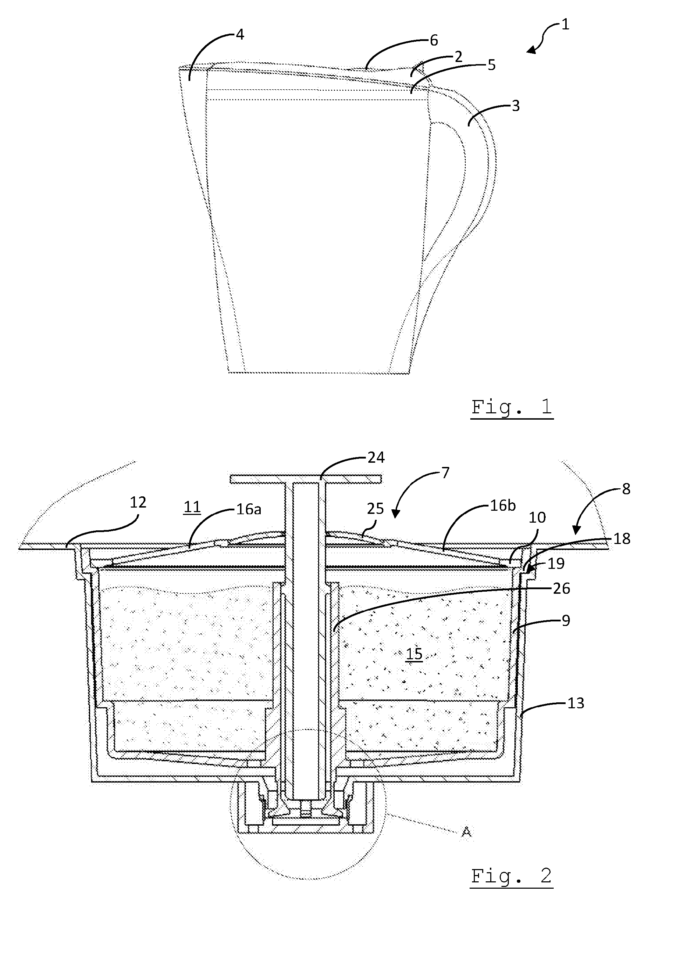

Moreover, for simplicity, the gravity-driven liquid treatment systems described by way of example are of the type comprising a jug 1 (Fig. 1), having a lid 2 and a handle 3. Such jugs 1 are generally for household use, dimensioned to fit in the door of a refrigerator. An extension of the lid 2 covers a spout 4 and is arranged to pivot to free the opening of the spout 4 to allow treated liquid to be poured out when the jug 1 is tilted. The lid 2 is removable to allow a reservoir (not shown in Fig. 1) to be inserted into the jug 1. A ledge 5 or similar feature is provided on an inside wall of the jug 1 to support an upper edge of the reservoir, such that it occupies an upper part of the inside of the jug 1. At least the upper edge of the reservoir is a shape-fit for the jug 1, bar a cut-out on one side to leave free a space for liquid to pour out through the spout 4.

The lid 2 is provided with a central opening with a separate cover 6 through which liquid to be treated can be poured in without removing the lid 2. This liquid is collected in the reservoir, from where it flows into the lower part of the jug 1 along a fluid path through a liquid treatment cartridge attached to the reservoir. Various features are provided to ensure that there is little or no bypass between the reservoir and the cartridge, so that the amount of untreated liquid collected in the lower part of the jug 1 is minimal. To this end, the reservoir is provided with a mechanical interface that ensures that liquid can only begin to flow when the cartridge has been properly positioned relative to the reservoir. Additionally, the interface provides a shape-lock with the cartridge to retain the cartridge in place relative to the interface.

A first cartridge 7 and reservoir 8 are illustrated in Figs. 2-5. The cartridge 7 includes a housing manufactured from essentially two components, herein referred to in simplified terms as a cup 9 and a cap 10. The cap 10 is welded to the cup 9, e.g. ultrasonically. Both the cap 10 and the cup 9 are moulded components, e.g. injection-moulded plastic components.

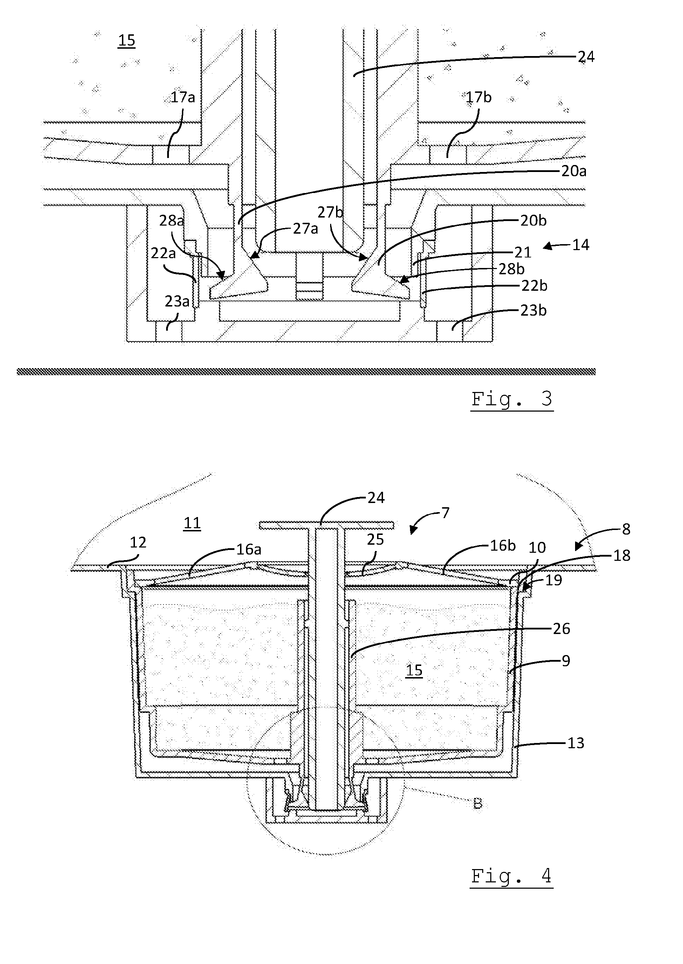

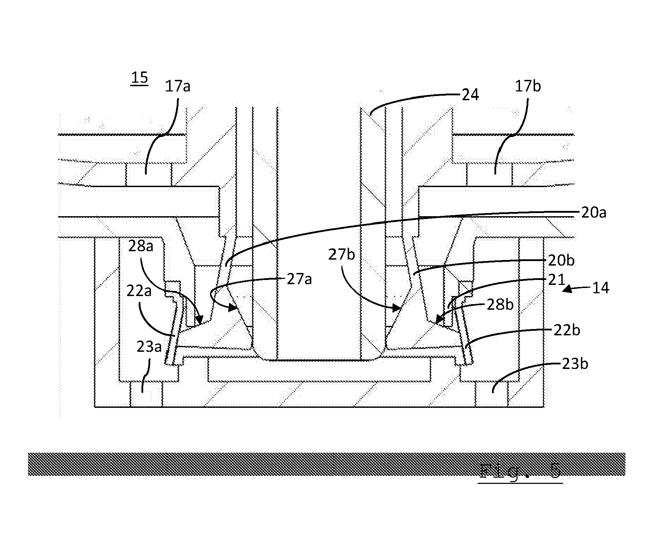

The reservoir 8 is shown only in part in Figs. 2-5, but extends to define a space 11 for receiving the liquid to be treated. A bottom wall 12 of the reservoir 8 surrounds a mouth of a cartridge chamber 13 into which the cartridge 7 is insertable through the mouth. The cartridge chamber 13 is provided with side walls extending away from the bottom wall 12 of the reservoir 8 and the space 11 defined by it for receiving the liquid to be treated. The side walls transition into a bottom wall of the cartridge chamber 13, so that the cartridge chamber 13 is closed except for the mouth and an interface 14 (Figs. 3 and 5) provided in the bottom wall of the cartridge chamber 13. The interface 14 defines one or more fluid paths out of the cartridge chamber 13 that are closable by respective valves, as will be explained.

The cartridge 7 is filled with a liquid treatment medium 15. The liquid treatment medium 15 can be a granular medium, for example. It can additionally or alternatively comprise fibres, in particular chopped fibres. The liquid treatment medium 15 generally comprises at least one of an adsorbent, an absorbent, an ion exchange material, a catalyst, a desorbent, a substance arranged to dissolve in the liquid to be treated, a biologically active substance, in particular a microbicide, and a chelating material. As an example, the liquid treatment medium 15 can comprise a mixture of activated carbon and a weakly or strongly acidic cation exchanger.

The liquid treatment medium 15 is supported by a membrane (not visible in the drawings), e.g. a mesh or sieve, acting as a barrier to retain the liquid treatment medium 15 but allowing the treated liquid to pass through.

The cap 10 of the cartridge 7 is provided with one or more inlet openings, here in the form of inlet slits 16a,b. A bottom wall of the cup 9 is provided with outlet openings 17a,b (Figs. 3 and 5). Water to be treated flows in through the inlet slits 16, through the liquid treatment medium 15 and out through the outlet openings 17.

The cartridge 7, in particular the cup 9, is provided with a rim 18 extending around its circumference. The rim 18 is situated in a plane between the inlet slits 16 and the outlet openings 17. It is configured to co-operate with a sealing surface 19 provided on the side walls of the cartridge chamber 13 and surrounding the cartridge 7, when inserted. This arrangement seals off any bypass of liquid, provided the cartridge 7 has been sufficiently inserted, i.e. pressed down, into the cartridge chamber 13. The interface 14 and co-operating features of the cartridge 7 are configured to ensure that this is the case.

As to the features of the cartridge 7, it is provided with a plurality of valve actuating members 20a,b. The valve actuating members 20a,b are arranged around a body axis of the cartridge 7 that is oriented generally vertically when the cartridge is inserted into the cartridge chamber 13 and generally parallel to the direction of insertion. In an embodiment, the valve actuating members 20a,b are arranged rotationally symmetrically about this axis. In this embodiment, there can be three or more valve actuating members 20a,b. This depends to a certain extent on the contact forces between the rim 18 and the sealing surface 19, which in the illustrated embodiment are countered by forces exerted through the valve actuating members 20a,b.

In the illustrated embodiment, the valve actuating members 20 are integrally connected to the cartridge housing, in particular the cup 9. They extend from a bottom wall of the cartridge housing. The bottom wall transitions into a valve actuating member 20 at a proximal end of the latter. Each valve actuating member 20 extends longitudinally away from the cartridge 7, and is provided with a distal end that is arranged to interact with the interface 14. Because the valve actuating members 20 are slightly elongated in shape and made of plastic, they are relatively flexible. Thus, since they are connected to the cartridge 7 only at a proximal end, the distal end is moveable in a radial direction, i.e. sideways, relative to the axis of the cartridge 7 that is parallel to the direction of insertion. However, the valve actuating members 20 are held to the cartridge in a manner generally preventing their movement in any direction parallel to the direction of insertion. Thus, tensile retention forces can be transmitted longitudinally through the valve actuating members 20.

Referring to Fig. 3, it can be seen that the interface is provided with a cylindrical wall section 21 bordering a space into which at least the distal ends of the valve actuating members 20 can be inserted when the cartridge 7 is inserted into the cartridge chamber 13. This wall section 21 constrains outward, radial movement of the distal ends of the valve actuating members 20 during insertion. Only when the cartridge 7 has reached the position shown in Figs.3 and 5 in particular are the distal ends of the valve actuating members 20 aligned with flexible valve members 22a,b. Only then are they also movable in a direction transverse to the direction of movement during insertion of the cartridge 7, so as to be able to contact the flexible valve members 22 by moving past a lower edge of the wall section 21.

The valve members 22 are mounted such as to be biased towards a position in which they close off openings providing a fluid connection between the cartridge chamber 13 and interface outlet openings 23a,b that allow liquid to flow out of the reservoir 8. In one embodiment, the valve members 22 are pre-tensioned to provide a biasing force acting to close the valves comprising them, even when they are in the closed position. In another embodiment, there is generally no pre-tensioning force, but elastic forces act to return the valve members 22 to the closed position when they are moved out of the closed position. In any case, the valve comprising the valve members 22 are normally closed, in particular in the absence of the cartridge 7.

The cartridge 7 is provided with a plunger 24, of which a first end protrudes from the cap 10 of the cartridge 7 to define a push-button that a user can press. The plunger 24 and cap 10 are of one piece, e.g. manufactured by injection moulding. A region 25 with thinned edges provides a flexure bearing connecting the plunger 24 to a generally rigid remainder of the cap 10. The region 25 with thinned edges has a domed shape allowing it to snap between a first position (Figs. 2 and 3) in which the plunger 24 is held in an upper position, in which it protrudes to a maximum extent from the cartridge 7, and a lower position (Figs. 4 and 5), in which it protrudes to a lesser extent from the cartridge 7. A user must exert a certain force to cause the flexure bearing to snap between the two positions. To this end, the protruding end of the plunger 24 is shaped to allow both a pushing and a pulling force to be exerted on it by a user.

Movement of the plunger 24 in a direction generally parallel to the direction of insertion of the cartridge 7 into the cartridge chamber 13 is guided by a shaft 26 that is an integral part of the cup 9 of the cartridge housing and extends within the cartridge housing.

A lower end of the plunger 24, opposite the end accessible to the user, is provided with chamfered edges that are arranged to engage the distal ends of the valve actuating members 20a,b when the plunger 24 is moved down relative to the cartridge housing. These distal ends are provided with first angled contact surfaces 27a,b arranged to contact the lower end of the plunger 24 so as to translate the downward movement of the plunger 24 into radially outwardly directed movement of the distal ends of the valve actuating members 20a,b, thereby bringing them into engagement with the valve members 22. The flexure bearing causes the plunger 24 to snap into the position previously occupied by the radially inner parts of the distal ends of the valve actuating members 20, so that they are locked into positions in which they hold open the valve comprising the respective valve members 22 (Figs. 4 and 5). At the same time, a radially outer part of each valve actuating member 20 latches behind the lower edge of the wall section 21 past which it has been moved by the plunger 24. As a result, the cartridge 7 is locked in position.

In the illustrated embodiment, the radially outer parts of the distal ends of the valve actuating members 20a,b are provided with second contact surfaces 28a,b that are angled so as to face at least partially in a direction opposite to the direction of insertion and also partially in a radially outward-facing direction. These contact surfaces 28a,b can engage the edge of the wall section 21 to act as a wedge (see Fig. 5). Thus, if the cartridge 7 has not quite been inserted far enough into the cartridge chamber 13, downward movement of the plunger 24 and consequent radially outward movement of the distal ends of the valve actuating members 20 causes the cartridge 7 to be pulled further into the seat provided by the cartridge chamber 13. Thus, a tight seal between the rim 18 and the sealing surface 19 can be provided.

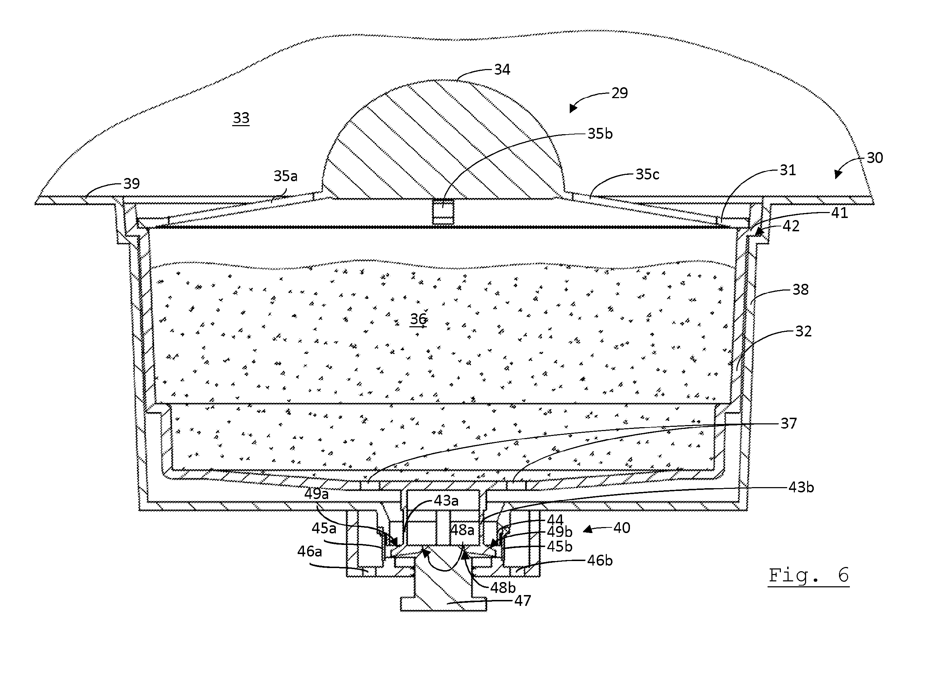

A second cartridge 29 and reservoir 30 are illustrated in Fig. 6. They are in many respects similar to the first. In particular, the cartridge 29 includes a housing comprised of a cap 31 and a cup 32. The reservoir 30 defines a space 33 for holding liquid to be treated by the cartridge 29.

The cap 31 is provided with a handle 34, but no plunger. There are inlet slits 35a-c in the cap 31 to allow liquid to be treated to flow in from the space 33 above the cartridge 29.

Since the cartridge 29 is not provided with a plunger, the cup 32 is also not provided with a shaft to guide such a plunger, leaving more space for a liquid treatment medium 36. The liquid treatment medium 36 can have the same composition as the liquid treatment medium 15 of the first embodiment, and is supported by a membrane (not visible in Fig. 6), e.g. a mesh or sieve. Outlet openings 37 are provided at an opposite end of the cartridge 29 to the end provided with the inlet slits 35, in this example in a bottom wall of the cartridge 29.

As in the first reservoir 8, a cartridge chamber 38 extends from a bottom wall 39 of the reservoir 30, below the space 33 for holding the liquid to be treated. Side walls of the cartridge chamber 38 join the bottom wall 39 at an edge of a mouth of the cartridge chamber 38. The cartridge chamber 38 is provided with an interface 40 at an end opposite to the mouth. This interface 40 defines one or more fluid paths out of the cartridge chamber 38 that are closable by respective valves.

A liquid seal is provided around the cartridge housing at a level between the inlet slits 35 and the outlet openings 37. In this example, again, the liquid seal is provided between a rim 41, located where the cap 31 is joined to the cup 32 of the cartridge housing, and a sealing surface 42 provided on the inside of a side wall or walls of the cartridge chamber 38. Although in this example the sealing surface faces in a direction generally opposite to a direction of insertion of the cartridge 29 into the cartridge chamber 38 and a co-operating sealing surface of the rim 41 faces generally in the direction of insertion, the latter surface may alternatively be generally conical or frusto-conical.

The second cartridge 29 is provided with valve actuating members 43a,b that extend downwards from a bottom wall of a housing of the cartridge 29. As in the first cartridge 7, the valve actuating members 43 and the wall from which they extend are of one piece, being obtainable by means of injection moulding, for instance. The valve actuating members 43 are provided with a distal end that is arranged to interact with the interface 40. They are slightly elongated in form and relatively flexible, such that they do not move in any direction parallel to the direction of insertion of the cartridge 29 into the cartridge chamber 38, but at least the distal ends are able to move in a direction transverse to the direction of insertion. The valve actuating members 43 are arranged about a body axis of the cartridge 29 extending from the level of the inlet slits 35 to the level of the outlet openings 37, which is an orientation generally parallel to the direction of insertion of the cartridge 29 into the cartridge chamber 38.

The interface 40 is provided with a generally cylindrical wall section 44 that borders a space into which the valve actuating members 43 are inserted when the cartridge 29 is inserted into the cartridge chamber 38. The wall section 44 inhibits radially outwardly directed movement of the distal ends of the valve actuating members 43 until the distal ends have moved downwards into the interface 40 past an edge of the wall section 44.

The interface 40 is provided with a number of flexible valve members 45a,b, each comprised in a respective valve that is normally closed. When moved out of their valve seats, the valve members 45 free a respective fluid connection to one or more of a number of interface outlet openings 46 that enable liquid to flow out into the jug 1, in use.

Radially outer parts of the distal ends of the valve actuating members 43 are aligned with the valve members 45 when the cartridge 29 has been sufficiently inserted into the cartridge chamber 38 - a position corresponding to contact between the rim 41 on the cartridge housing and the associated sealing surface 42 on the reservoir 30. In this position, they are able to contact the valve members 45 so as to open the respective valves, when moved radially outwardly.

In contrast to the first cartridge 7, the second cartridge 29 comprises a plunger 47 journalled to the interface 40. The plunger 47 protrudes from the interface 40 to provide an end accessible to the user. The user can push the plunger 47 in or pull it out. An opposite end of the plunger 47 is provided with a chamfer and arranged to be brought into contact with radially inner parts of the distal ends of the valve actuating members 43. These parts are provided with inclined surfaces 48 facing the chamfered edges of the plunger 47, so that inward movement of the plunger 47 forces the distal ends of the valve actuating members 43 sideways towards the valve members 45. Like in the first cartridge 7, inclined contact surfaces 49 facing partly in a direction opposite to the direction of insertion of the cartridge 29 into the cartridge housing and in the direction of an edge of the wall section 44 allow the cartridge 29 to be pulled in when the plunger 47 is pushed in.

The radially outer parts of the valve actuating members 43 latch behind the edge of the wall section 44 to provide a shape lock that prevents the cartridge 29 from moving out of the cartridge housing. The plunger 47, once pushed in, blocks return movement of the distal ends of the valve actuating members 43.

To remove the cartridge 29, a user must pull out the plunger 47 by the end that emerges from the interface 40 and pull up the cartridge 29 by the handle 34.

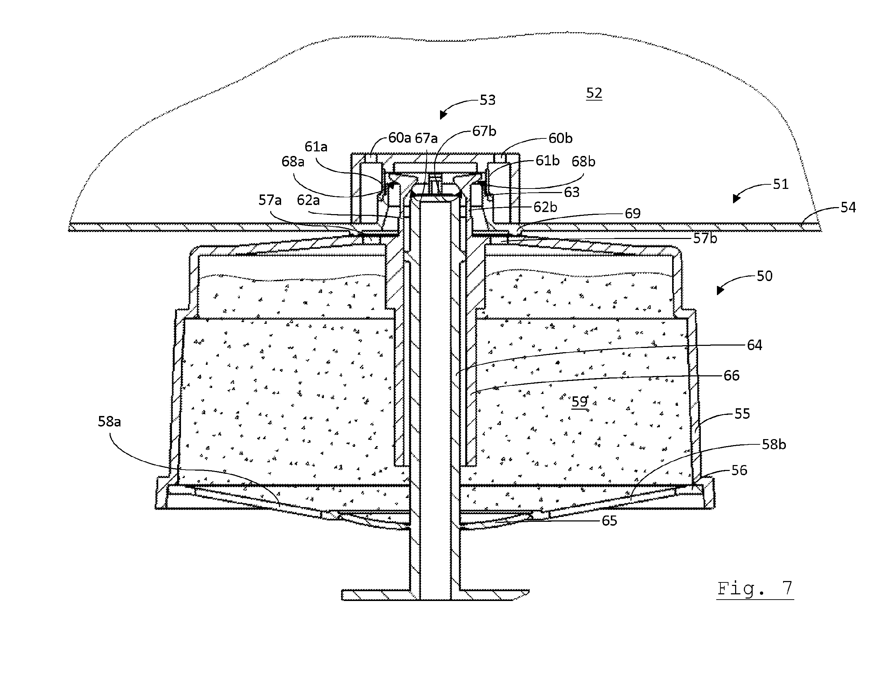

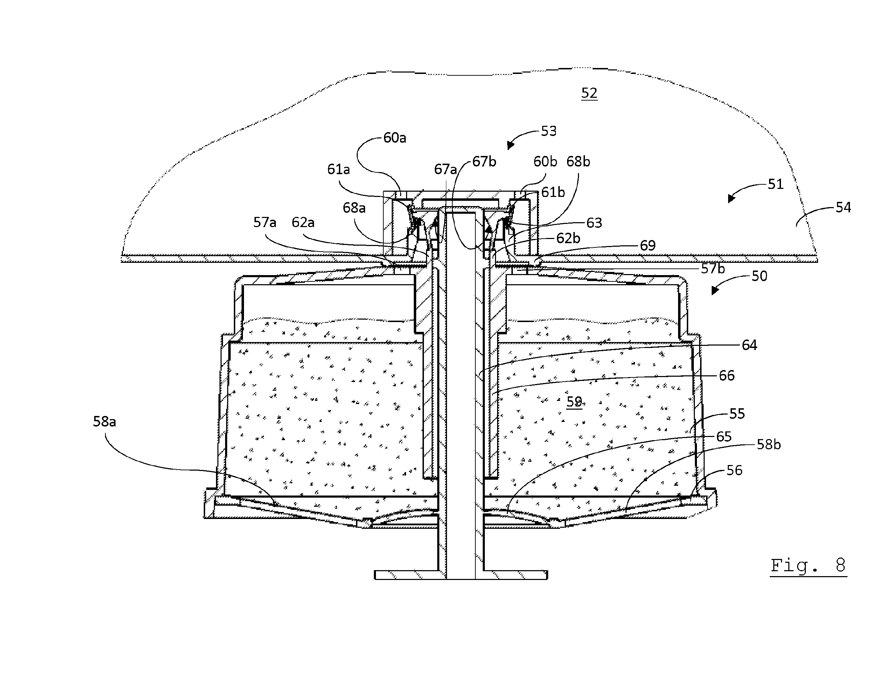

A third cartridge 50 and reservoir 51 are illustrated in Figs. 7 and 8. The reservoir 51 again defines a space 52 for holding liquid to be treated. In the configuration illustrated in Figs. 7 and 8, the cartridge 50 is arranged to be attached to an interface 53 of the reservoir 51 on an opposite side of a bottom wall 54 of the reservoir 51 to the space 52 in which the liquid to be treated is held.

The cartridge 50 illustrated in Figs. 7 and 8 also comprises a housing including a cup 55 and a cap 56 that are welded together. As the cartridge 50 is configured to be mounted with the cup 55 above the cap 56, inlet openings 57a,b are provided in a bottom wall of the cup 55. Outlet slits 58a,b are provided in the cap 56.

The cup 55 and the cap 56 enclose a space in which a liquid treatment medium 59 is accommodated. The description of the liquid treatment medium 15 of the cartridge 7 illustrated in Figs. 2-5 applies also to the liquid treatment medium 59 of the cartridge 50 of Figs. 7 and 8. A mesh (not visible in the drawings) or similar membrane is provided across the outlet slits 58 to prevent the liquid treatment medium 59 from being flushed out of the cartridge 50 by the liquid to be treated.

Because of the inverted configuration, the interface 53 is provided with inlet openings 60a,b that allow liquid held in the reservoir to flow into the interface. Valve members 61a,b are arranged to close off passages leading through and out of the interface 53. It is noted that the pressure of the liquid in the space 52 above the interface automatically forces the valve members 61 into the closed position, because they are located in valve seats facing away from the cartridge 50, when attached, relative to the direction of flow through the interface 53.

The valve members 61 are arranged to be displaced out of their closed positions by respective valve actuating members 62 that are part of the cartridge 50.

The valve actuating members 62 project from the bottom wall of the cup 55 of the cartridge housing. The cup 55 and the valve actuating members 62 are made in one piece, e.g. by injection moulding. The valve actuating members 62 transition into the bottom wall of the cup 55 at proximal ends. Opposite, distal ends are arranged to be movable in a direction transverse to a direction corresponding to the direction in which the cartridge 50 is moved to attach it to the reservoir 51. In the course of this movement, the distal ends of the valve actuating members 62 are first moved into a space bordered by a generally cylindrical wall section 63 of the interface 53. This wall section 63 blocks any sideways movement of the distal ends of the valve actuating members 62 until the distal ends have been moved past an edge of the wall section 63. In this position, the radially outer parts of the distal ends are aligned with the valve members 61 and displaceable in the direction of these valve members 61 so as to move them out of their closed positions.

A plunger 64 is provided in the cartridge 50 to enable a user to push the distal ends of the valve actuating members 62 into engagement with the valve members 61. The plunger 64 is integrally connected to the cap 56 of the cartridge housing via a region 65 with thinned edges acting as a flexure bearing. The region 65 with thinned edges has a domed shape, so that the plunger 64 can snap between an inserted and a retracted position. Movement of the plunger 64 is guided by a shaft 66 that is formed in one piece with the cup 55.

An end of the plunger 64 protruding from the cartridge 50 is shaped to allow a user to push the plunger in or pull it out of the cartridge. An opposite end of the plunger 64 is provided with a chamfer. Radially inner parts of the distal ends of the valve actuating members 62 are provided with first inclined surfaces 67a,b facing the plunger 64. Thus, pushing the plunger 64 into contact with the first inclined surfaces 67 causes the distal ends of the valve actuating members 62 to move in a direction transverse to the direction of movement of the cartridge 50 towards a position of attachment to the reservoir 51. This direction corresponds to a radially outwardly directed direction relative to a body axis of the cartridge 50 that is parallel to the direction of movement of the cartridge 50 and about which the valve actuating members 62 are arranged.

Radially outer parts of the distal ends of the valve actuating members 62 are provided with second inclined surfaces 68a,b that partially face in a direction opposite to the direction of movement of the cartridge 50 and towards an edge of the wall section 63. Contact between the second inclined surfaces 68 and this edge will result in a force tending to pull the cartridge 50 towards the reservoir 51.

As the plunger is moved in, it occupies a space vacated by the radially inner parts of the distal ends of the valve actuating members 62, thereby blocking return movement thereof. In this way, a shape-lock between the valve actuating members 62 and the interface is brought about (the situation depicted in Fig. 8). In the locked state, the cartridge 50 is suspended from the bottom of the reservoir 51 without risk of falling off. The region 65 with thinned edges has snapped into a position in which it prevents the plunger 64 from moving out of the position in which it blocks return movement of the distal ends of the valve actuating members 62.

The force exerted on the cartridge 50 through the interaction between the second inclined surfaces 68 and the edge of the wall section 63 counters a contact force between a sealing rim 69 provided on an outwardly facing side of the bottom wall 54 of the reservoir 51 and an associated contact surface on the cartridge 50. In the position of engagement, the sealing rim 69 surrounds the inlet openings 60 in the cartridge housing. Thus, liquid flowing past the valve members 61 can only flow into the cartridge 50, through the liquid treatment medium 59 and out through the outlet slits 58.

To remove the cartridge 50, it is sufficient to pull the plunger 64 out. The valve members 61 are returned to their closed positions by their inherent elasticity and the pressure of any water remaining in the reservoir 51.

The invention is not limited to the embodiments described above, which may be varied within the scope of the accompanying claims. For example, the reservoir need not be a reservoir for insertion into a jug, but can be a reservoir for a different type of gravity-driven system, e.g. a reservoir for insertion into the tank of a table-top dispenser or into a tank of a water treatment system built into a refrigerator. In such systems, the reservoir need not be removable, but can be permanently connected to the tank.

Instead of or in addition to a component for treating liquid conducted through the cartridge in the form of an active liquid treatment medium, the cartridge can comprise a component effecting only a mechanical filtering of the liquid.

Instead of an integral rim 18, the cartridge 7 can be provided with a separate sealing ring, e.g. made of silicone or a softer material than the cartridge housing. Whether separate or integral, the sealing rim of the cartridge or reservoir surrounds at least one inlet and/or outlet opening to at least one side of a plane in which the sealing ring lies, in the sense that a projection of the opening(s) on that plane lies within the confines of the sealing ring. The features described herein help keep the sealing ring in contact with an opposing sealing surface.

## Claims

1. Fluid treatment system, including:
a fluid treatment cartridge (7;29;50), including at least one component (15;36;59) for treating fluid conducted through the cartridge (7;29;50); and
a device (8;30;51) including an interface (14;40;53) for attaching the cartridge (7;29;50) to the device (8;30;51) and at least one valve, the valve including a valve member (22;45;61) movable out of a closed position to free a fluid passage through the cartridge (7;29;50), when attached to the device (8;30;51),
wherein at least one of the interface (14;40;53) and the cartridge (7;29;50) includes at least one part (21;44;63) bordering a space into which at least part (20;43;62) of the other of the interface (14;40;53) and the cartridge (7;29;50) is insertable, to allow movement of the cartridge (7;29;50) along a path to a final position of engagement with the device (8;30;51),
wherein the cartridge (7;29;50) includes at least one valve actuating member (20;43;62), able to engage a component (22;45;61) of the interface (14;40;53) to cause at least one of the valve members (22;45;61) to be moved out of the closed position, once the cartridge (7;29;50) has reached a certain position along the path, **characterised in that**
at least one of the valve actuating members (20;43;62) includes at least a part that is movable relative to the cartridge (7;29;50) in a first direction, transverse to a direction of movement along the path, and is aligned with at least part of the interface
component (22;45;61) to allow it to engage the interface component (22;45;61) only when the cartridge (7;29;50) has reached the certain position along the path.

2. System according to claim 1, wherein the interface (14;40;53) includes a wall section (21;44;63), and wherein at least a part of at least one of the valve actuating members (20;43;62) is movable in the first direction past an edge of the wall section (21;44;63) only when the cartridge (7;29;50) has reached the certain position along the path.

3. System according to claim 2, wherein the at least one valve actuating member (20;43;62) is held to the cartridge (7;29;50) in a manner generally preventing its movement in a direction parallel to the direction of movement of the cartridge (7;29;50) along at least a section of the path immediately preceding the certain position.

4. System according to claim 3, wherein the part of the valve actuating member (20;43;62) movable past the edge of the wall section (21;44;63) is provided with a contact surface (28;49; 68) angled so as to face at least partially in a direction opposite to the direction of movement along the path.

5. System according to any one of the preceding claims, wherein at least one of the valve members (22;45;61) is arranged to be biased towards the closed position.

6. System according to any one of the preceding claims, wherein at least one of the cartridge (7;29;50) and the interface (14;40;53) is provided with a component (24;47;64), movable by a user into a position in which at least part of the component (24;47;64) blocks return movement of at least part of at least one of the valve actuating members (20;43;62) in a direction opposite to the first direction.

7. System according to claim 6, wherein at least one of the movable component (24;47;64) and the at least one valve actuating member (20;43;62) is provided with an inclined contact surface (27;48;67) along which the other of the movable component and the at least one valve actuating member (20;43;62) is movable.

8. System according to claim 6 or 7, wherein the movable component (24;64) is comprised in the cartridge (7;50) and guided for movement relative to the cartridge (7;50) in a direction parallel to the direction of movement along the path into the position blocking return movement of at least part of at least one of the valve actuating members (20;62).

9. System according to any one of claims 6-8, wherein the movable component (24;47;64) is provided in the form of a plunger.

10. System according to claim 9, wherein the plunger (24;64) is integrally connected to a part of a housing of the cartridge (7;29;50) by a flexure bearing (25;65).

11. System according to claim 10, wherein the flexure bearing (25;65) is configured to snap into a position in which at least part of the plunger (24;64) blocks return movement of at least part of at least one of the valve actuating members (20;62).

12. System according to any one of the preceding claims, wherein the cartridge (7;29;50) is provided with a plurality of valve actuating members (20;43;62), each including at least a part that is movable relative to the direction of movement of the cartridge (7;29;50) along the path and radially relative to an axis of the cartridge (7;29;50), wherein the axis is generally parallel to the direction of movement of the cartridge (7;29;50) along at least a section of the path immediately preceding the certain position.

13. System according to any one of the preceding claims, wherein at least one of the valve actuating members (20;43;62) is provided in the form of a flexible member, integrally attached to a part of a housing of the cartridge (7;29;50) and provided with a part movable relative to the cartridge (7;29;50) in the first direction by flexing of the flexible member.

14. System according to any one of the preceding claims, wherein at least one of the cartridge (7;29;50) and the device (8;30;51) is provided with a sealing ring (18;41;69) for engaging a surface (19;42) of the other of the cartridge (7;29;50) and the device (8;30;51), and the sealing ring (18;41;69) lies generally in a plane transverse to the direction of movement of the cartridge (7;29;50) along at least a section of the path immediately preceding the certain position.

15. System according to any one of the preceding claims, wherein the device (8;30) includes a chamber (13;38) for receiving the cartridge (7;29), the chamber (13;38) including at one end a mouth through which at least part of the cartridge (7;29) is insertable and at an opposite end the interface (14;40) and at least one fluid outlet closable by a respective one of the at least one valve members (22;45), wherein at least one of the device (8;30) and the cartridge (7;29) is provided with a sealing ring (18;41) for engaging the other of the device (8;30) and the cartridge (7;29), wherein the cartridge (7;29) includes at least one fluid inlet (16;35) to one side of the sealing ring and the valve actuating members (20;43) and at least one fluid outlet (17;37) to an opposite side of the sealing ring when the cartridge (7;29) is attached to the device (8;30).
